# EUROPÄISCHE PATENTSCHRIFT

(11) **EP 2 163 497 B1**
(45) Veröffentlichungstag und Bekanntmachung des Hinweises auf die Patenterteilung: **16.01.2013**
(21) Anmeldenummer: 09010384.7
(22) Anmeldetag: 12.08.2009
(51) Int. Cl.: B65G 13/04, B65G 13/11, B65G 47/26

(54) **Rollenförderer**
Roller conveyor
Transporteur à rouleaux

(30) Priorität: 10.09.2008 DE 102008046518
(43) Veröffentlichungstag der Anmeldung: 17.03.2010
(73) Patentinhaber: Robert Bosch GmbH, 70469 Stuttgart (DE)
(72) Erfinder: Willi, Marco, 71726 Benningen am Neckar (DE); Porzer, Volker, 73666 Baltmannsweiler (DE); Buttau, Hans-Peter, 74348 Lauffen (DE); Ludwig, Peter, 72072 Tübingen (DE); Ulmer, Peter, 73660 Urbach (DE)
(74) Vertreter: Maiß, Harald

(56) Entgegenhaltungen:
- DE-A1- 2 029 647
- DE-A1- 19 524 308
- JP-A- 61 007 111
- US-B1- 6 367 618

## Beschreibung

Die Erfindung betrifft einen Rollenförderer gemäß dem Oberbegriff von Anspruch 1.

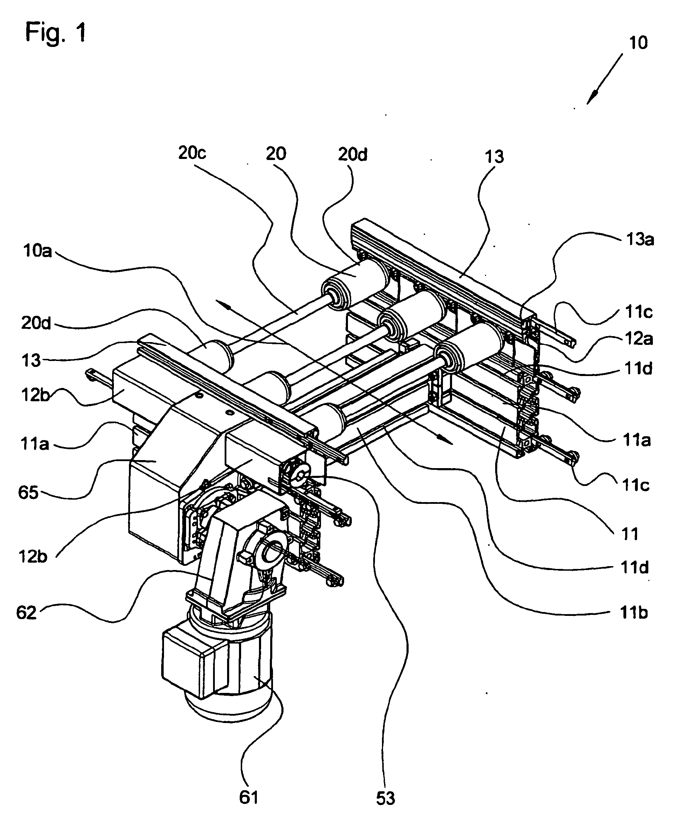

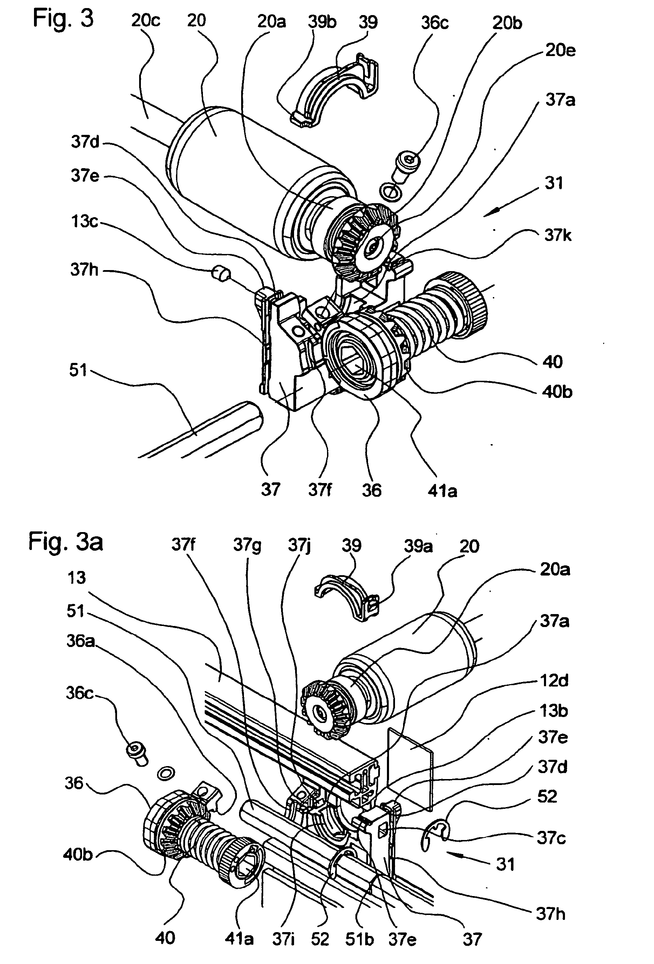

Aus der DE 195 24 308 A 1 ist ein Rollenförderer entsprechend dem Oberbegriff von Anspruch 1 bekannt. Gemäß der Fig. 3 der DE 195 24 308 A 1 umfasst der Rollenförderer mehrere Förderrollen 3, die eine Förderfläche definieren, wobei die Förderrichtung senkrecht zu den parallelen Drehachsen der Förderrollen verläuft. An ihren Enden sind die Förderrollen drehbar mit einer ersten und einer zweiten Lagerbaugruppe 4a verbunden. Die Lagerbaugruppen sind an einem Gestell (Nr. 1 in Fig. 1) in Form eines Aluminium-Strangpressprofils befestigt, welches mit hinterschnittenen, T-förmigen Befestigungsnuten ausgestattet ist, so dass die Lagerbaugruppen an unterschiedlichen, kontinuierlich veränderlichen Stellungen des Gestells befestigt werden können. Alle Förderrollen sind im Bereich der zweiten Lagerbaugruppe mit einem ersten Antriebsrad 8 in Form eines Kegelzahnrades versehen, das in ein zweites Antriebsrad 8a eingreift, das ebenfalls als Kegelzahnrad ausgeführt ist. Die zweiten Antriebsräder sind auf einer gemeinsamen Antriebswelle 7 angeordnet, die eine sechseckige Querschnittsform aufweist, so dass die daran angepassten zweiten Antriebsräder in formschlüssiger Drehantriebsverbindung mit der Antriebswelle stehen.

Gemäß der Fig. 5 der DE 195 24 308 A1 ist ein gesondertes drittes Antriebsrad 20 in Form eines Zahnriemenrades vorgesehen, das zwischen zwei Förderrollen am Gestell drehbar gelagert ist. Das dritte Antriebsrad steht über einem Zahnriemen 18 mit einem nicht dargestellten Elektromotor in Drehantriebsverbindung.

Der Nachteil dieses Antriebs besteht darin, dass der Abstand der beliebig positionierbaren Förderrollen nicht mehr frei gewählt werden kann, da Rücksicht auf den mindestens notwendigen Bauraum für die Antriebseinrichtung genommen werden muss. Dies ist besonders dann nachteilig, wenn die Komponenten des Förderers in Form eines Baukastensystems angeboten werden sollen. In diesem Fall werden für bestimmte vorgegebene Abstandsmaße der Förderrollen alle notwendigen Zubehörteile wie Abdeckungen, Antriebswellen, Gestellteile, u. s. w., serienmäßig hergestellt. Um einen universell anwendbaren Baukasten zu schaffen, kommt es aber entscheidend darauf an, dass alle Förderrollen den gleichen Abstand aufweisen. Im Fall geringer Förderrollenabstände lässt sich dieses Ziel aber mit dem Antrieb gemäß der DE 195 24 308 A 1 nicht realisieren.

Gemäß dem selbstständigen Anspruch wird daher vorgeschlagen, dass an der zweiten Lagerbaugruppe wenigstens in einer Förderrolle ein drittes Antriebsrad drehbar gelagert ist, das drehfest auf der Antriebswelle angeordnet ist, wobei das dritte Antriebsrad mit einem Antrieb in Drehantriebsverbindung steht. Demgemäß wird das dritte Antriebsrad nicht mehr zwischen zwei Förderrollen vorgesehen, sondern innerhalb des Erstreckungsbereiches einer Förderrolle. Folglich kann der Abstand der Förderrollen auch im Bereich des Antriebes genauso frei gewählt werden, wie bei den übrigen Förderrollen. Die zweite Lagerbaugruppe ist für die Lagerung des dritten Antriebsrades besonders vorteilhaft, da durch die gemeinsame Lagerung der Förderrollen und des dritten Antriebsrades mit der Antriebswelle in einer Baugruppe eine hohe Ausrichtgenauigkeit zwischen den entsprechenden Drehachsen erreicht wird. Darüber hinaus sind keine gesonderten Vorkehrungen notwendig, um eine Verschiebbarkeit des Antriebs, insbesondere der Lagerung des dritten Antriebsrades gegenüber dem Gestell zu ermöglichen, da dieser zusammen mit der zugeordneten Förderrolle auf dem Gestell verschoben und befestigt werden kann.

Das dritte Antriebsrad ist in der geradlinigen Verlängerung der Drehachse der zugeordneten Förderrolle angeordnet, wobei die genannte Förderrolle kein erstes Antriebsrad aufweist. Das dritte Antriebsrad soll also in dem Bauraum angeordnet werden, in dem im Normalfall das zweite Antriebsrad angeordnet ist.

Hierdurch ergibt sich eine besonders kompakte zweite Lagerbaugruppe, die insbesondere im Wesentlichen die gleichen Hauptabmessungen aufweist wie eine normale, nicht angetriebene zweite Lagerbaugruppe, so dass die Förderrolle mit dem Antrieb genau so frei auf dem Gestell verschoben werden kann, wie jede andere Förderrolle. Der Umstand, dass die dem Antrieb zugeordnete Förderrolle selbst nicht angetrieben wird, ist regelmäßig nicht von Nachteil, da das Fördergut, beispielsweise ein Werkstückträger, meist auf mehreren Förderrollen aufliegt, wobei es ausreicht, wenn wenigstens eine dieser Förderrollen angetrieben ist.

In den Unteransprüchen sind vorteilhaft Weiterbildungen und Verbesserungen der Erfindung angegeben.

Die Antriebswelle kann längsverschiebbar in dem dritten Antriebsrad aufgenommen sein. Hierdurch soll eine einfache Montage und Demontage der Antriebswelle ermöglicht werden. Durch die genannte Längsverschiebbarkeit wird erreicht, dass die Antriebswelle auf einfache Weise in das dritte Antriebsrad eingeschoben werden kann, bis sie in der gewünschten Position ist. Bevorzugt ist die Antriebswelle auch in allen zugeordneten zweiten Antriebsrädern längsverschiebbar aufgenommen, damit der genannte Effekt voll zum Tragen kommt. Selbstverständlich können an der Antriebswelle demontierbare Positioniermittel, beispielsweise Sicherungsscheiben, vorgesehen sein, die die Einbaulage der Antriebswelle definieren. Die oben genannte Längsverschiebbarkeit muss dementsprechend nur gegeben sein, wenn die genannten Positioniermittel nicht auf der Antriebswelle angebracht sind.

Die Antriebswelle kann über ihre gesamte Länge eine im Wesentlichen konstante Querschnittsform aufweisen, die von der Kreisform abweicht, wobei die Querschnittsform vorzugsweise als Sechseck ausgeführt ist, wobei das dritte Antriebsrad einen Durchbruch aufweist der von der Antriebswelle durchsetzt wird, wobei der Durchbruch so an die Antriebswelle angepasst ist, dass das dritte Antriebsrad in Drehrichtung formschlüssig mit der Antriebswelle verbunden ist. Eine derart geformte Antriebswelle kann besonders einfach mit der notwendigen Geradheit in Form von langen Stangen serienmäßig und damit kostengünstig hergestellt werden, wobei gleichzeitig die oben genannte Längsverschiebbarkeit gewährleistet ist.

Das dritte Antriebsrad kann über ein Zugmittel in Drehantriebsverbindung mit einem Motor stehen. Bei dem Zugmittel handelt es sich bevorzugt um einen Zahnriemen, damit eine geräuscharme und schlupffreie Drehmomentübertragung gegeben ist. Der Motor ist bevorzugt ein Elektromotor. Durch die Drehmomentübertragung wird erreicht, dass der Motor so weit entfernt von den Förderrollen angeordnet werden kann, dass dieser bei der Positionierung der Förderrollen an dem Gestell nicht im Weg ist. Anzumerken ist in diesem Zusammenhang, dass das Zugmittel prinzipbedingt im Wesentlichen senkrecht zur Antriebswelle ausgerichtet ist, so dass es sich ebenfalls innerhalb einer gedachten seitlichen Verlängerung der zugeordneten Förderrolle befindet, weshalb es den benachbarten Förderrollen nicht im Weg sein kann.

An dem Gestell kann ein gesonderter Motorflansch vorgesehen sein, an dem der Motor lageverstellbar befestigt ist. Durch eine Lageverstellung des Motors kann das Zugmittel in einfacher Weise auf die im Betrieb notwendige Spannung gebracht werden. Mit dem gesonderten Motorflansch wird erreicht, dass die komplizierte Verschiebeanordnung für den Motor an jeder beliebigen Stelle des Gestells, das vorzugsweise als T-Nuten-Profil ausgeführt ist, vorgesehen werden kann, wobei als Motorflansch ein kostengünstiges Serienbauteil zum Einsatz kommt. Der Motor kann zur Spannungseinstellung des Zugmittels in der gewünschten Verschiebestellung lösbar fixiert sein. Es ist aber auch möglich, dass er mit Federkraft in dieser Stellung gehalten wird.

An dem Motorflansch kann ein Einstellmittel, vorzugsweise eine Einstellschraube, vorgesehen sein, mit der der Motor verschoben werden kann, so dass das Zugmittel gespannt wird. Diese Vorrichtung zur Spannungseinstellung ist besonders einfach und kostengünstig.

An der zweiten Lagerbaugruppe kann ein Ausrichtmittel vorgesehen sein, das in Ausrichteingriff mit einem Gegenausrichtmittel an dem Motorflansch steht. Sowohl die zweite Lagerbaugruppe als auch der Motorflansch sind an dem Gestell vorzugsweise frei verschiebbar befestigt. Dementsprechend weist das Gestell keine Ausrichtmittel auf, mittels derer die genannten Baugruppen relativ zueinander so ausgerichtet werden können, dass das Zugmittel eine optimale Einbaulage aufweist, die einen geräusch- und verschleißarmen Ablauf desselben ermöglicht. Die Ausrichtmittel an der zweiten Lagerbaugruppe und dem Motorflansch erleichtern also die Montage des Rollenförderers erheblich. Darüber hinaus ist die Lage der genannten Ausrichtmittel unabhängig vom Förderrollenabstand, so dass die genannten Bauteile mit den Ausricht- bzw. Gegenausrichtmitteln problemlos serienmäßig und damit kostengünstig hergestellt werden können.

Das Zugmittel kann von einer Abdeckung umschlossen sein, die an der zugeordneten zweiten Lagerbaugruppe befestigt ist. Es ist bekannt, Zugmittel mit einem Gehäuse zu umschließen, damit Personen, die sich im Umfeld desselben aufhalten, von der von dem Zugmittel ausgehenden Verletzungsgefahr geschützt sind. Dieses Gehäuse kann besonders vorteilhaft an der zweiten Lagerbaugruppe befestigt werden, da die dortigen Befestigungsmittel serienmäßig hergestellt werden können, weil deren Lage unabhängig von der Position der Förderrollen am Gestell ist.

Zu beiden Seiten des dritten Antriebsrades kann ein Drehlager vorgesehen sein, das in der zugeordneten zweiten Lagerbaugruppe aufgenommen ist. Eine derartige beidseitige Lagerung weist bei kompakten Bauabmessungen eine hohe Steifigkeit aus. Darüber hinaus kann die entsprechende Aufnahmegeometrie, die vorzugsweise flanschartig ausgeführt ist, so an der zweiten Lagerbaugruppe angeordnet werden, dass sie die Drehlagerung der zugeordneten Förderrolle nicht stört.

Die Erfindung wird im Folgenden anhand der beigefügten Zeichnungen näher erläutert. Es stellt dar:
- Fig. 1: eine perspektivische Ansicht eines modulartigen Abschnitts eines erfindungsgemäßen Rollenförderers, der mit einem Motor ausgestattet ist;
- Fig. 2: eine Explosionsansicht eines modulartigen Abschnitts eines erfindungsgemäßen Rollenförderers, der nicht mit einem Motor ausgestattet ist;
- Fig. 3: eine erste Explosionsansicht der zweiten und dritten Lagerbaugruppe mit der Antriebsbaugruppe;
- Fig. 3a: eine zweite Explosionsansicht der zweiten und dritten Lagerbaugruppe mit der Antriebsbaugruppe gemäß Fig. 3;
- Fig. 4: eine Explosionsansicht einer Antriebsbaugruppe mit der zugeordneten dritten Lagerbaugruppe;
- Fig. 4a: einen Querschnitt der Baugruppe gemäß Fig. 4;
- Fig. 5: eine perspektivische Ansicht des Aufnahmeteils;
- Fig. 6: eine Explosionsansicht einer zweiten Lagerbaugruppe, die mit einem dritten Antriebsrad ausgestattet ist;
- Fig. 7: eine Vorderansicht des Antriebsmoduls gemäß Fig. 1; und
- Fig. 7a: einen vergrößerten Ausschnitt von Fig. 7 im Bereich der Antriebswelle.

Fig. 1 zeigt einen modulartigen Abschnitt eines Rollerförderers 10, der dazu bestimmt ist mit weiteren ähnlichen Modulen die gesamte Förderstrecke zu bilden. Da dieses Modul mit einem Motor 61 zum Antrieb der Förderrollen 20 ausgestattet ist, wird es als Antriebsmodul bezeichnet.

Das Antriebsmodul umfasst ein Gestell 11 mit zwei parallelen Längsträgern 11a, die sich parallel zur Förderrichtung 10a erstrecken und die über einen Querträger11b miteinander verbunden sind. Die Längsträger 11 a und der Querträger 11b sind jeweils aus Aluminium stranggepresst, wobei an ihren Außenoberflächen eine Vielzahl von hinterschnittenen, T-förmigen Nuten 11 d vorgesehen sind, an denen andere Bauteile in unterschiedlichen, kontinuierlich veränderlichen Positionen befestigt werden können.

An den stirnseitigen Enden der Längsträger 11 a sind in den hinterschnittenen Nuten mehrere Verbindungsleisten11 c aufgenommen, mit denen aneinander angrenzende Module des Rollenförderers fest miteinander verbunden werden können.

An der Oberseite der Längsträger 11 a sind mehrere parallele Förderrollen 20 jeweils an beiden Enden drehbar gelagert. Die Förderrollen umfassen jeweils eine Rollenachse 20c aus Stahl, an deren beiden Endbereichen je ein Auflageabschnitt 20d mit einer kreiszylindrischen Oberfläche aus Kunststoff vorgesehen ist. Die Auflageabschnitte 20d definieren eine ebene Förderfläche, in der das Fördergut in Form eines plattenartigen (nicht dargestellten) Werkstückträgers bewegt werden kann. Seitlich wird die Förderfläche durch zwei Seitenführungsleisten 13 begrenzt, die mit einem auswechselbaren Reibbelag 13a aus Kunststoff versehen sind, an dem die Werkstückträger entlang gleiten. Die Seitenführungsleisten 13 sind ebenfalls aus Aluminium stranggepresst.

An einer Seitenfläche eines Längsträgers 11 a ist ein Elektromotor 61 vorgesehen, der über ein Zahnradgetriebe 62 und einen Zahnriementrieb mit einer Antriebswelle in Drehantriebsverbindung steht. Da die Antriebswelle von einer Abdeckung 12b abgedeckt ist, ist von der Antriebswelle in Fig. 1 nur die Klauenkupplung 53 an deren Ende zu erkennen, mit der die Drehantriebsverbindung zu der Antriebswelle des angrenzenden Moduls des Rollenförderers hergestellt wird. Die Kraftübertragung von der Antriebswelle auf die Förderrollen 20 wird weiter unten noch näher erläutert. Der Zahnriementrieb ist in Fig. 1 ebenfalls nicht zu erkennen, da er aus Sicherheitsgründen von der Riemenabdeckung 65 abgedeckt ist. Hinzuweisen ist noch auf die Abdeckung 12a auf der der Antriebswelle gegenüber liegenden Seite. Die beiden Abdeckungen 12a und 12b sind jeweils aus Aluminium stranggepresst und besitzen eine im Wesentlichen U-förmige Querschnittsform, wobei sie sich nur bezüglich der Länge der U-Schenkel unterscheiden.

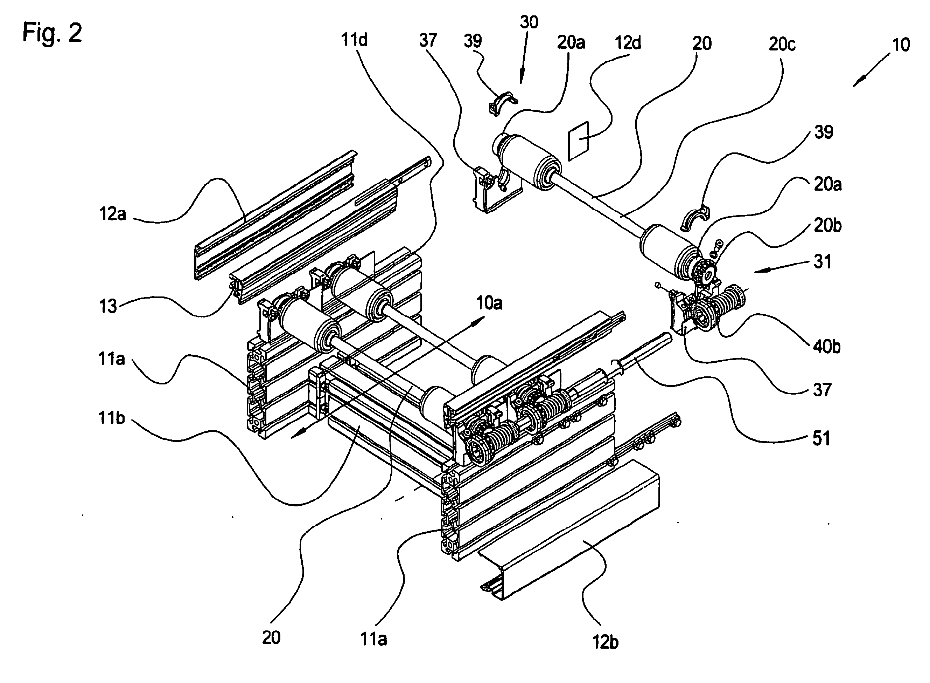

Fig. 2 zeigt ein weiteres Modul des erfindungsgemäßen Rollenförderers 10, das nicht mit einem Antriebsmotor ausgestattet ist. Man spricht daher auch von einem Streckenmodul. Das Streckenmodul gemäß der Fig. 2 ist bis auf den fehlenden Antrieb identisch mit dem Antriebsmodul gemäß Fig. 1 ausgeführt. Dementsprechend sind identisch ausgeführte Teile mit den gleichen Bezugsziffern versehen. Bezüglich der identischen Teile wird auf die vorstehenden Ausführungen verwiesen, um Wiederholungen zu vermeiden.

Gemäß Fig. 2 sind die Förderrollen 20 jeweils mit einem ersten Antriebsrad 20b in Form eines Kegelzahnrads ausgestattet, welches unmittelbar an der Rollenachse 20c drehfest befestigt ist. Jedem ersten Antriebsrad 20b ist ein zweites Antriebsrad 40b zugeordnet, das ebenfalls als Kegelzahnrad ausgeführt ist. Um einen geräusch- und verschleißarmen Zahnradeingriff zu gewährleisten, besteht das erste Antriebsrad 20b aus Polyoxymethylen (POM), während das zweite Antriebsrad 40b aus Polyamid (PA) oder Sintermetall besteht oder umgekehrt. Alle zweiten Antriebsräder 40b sind auf einer gemeinsamen Antriebswelle 51 angeordnet, die die gleiche Länge aufweist wie das zugeordnete Modul des Rollenförderers 10. Auf den Drehantriebseingriff zwischen den zweiten Antriebsrädern 40b und der Antriebswelle 51 wird weiter unten noch näher eingegangen. Die Antriebswelle 51 ist genau senkrecht zu den zugeordneten parallelen Förderrollen 20 ausgerichtet, wobei sich deren Drehachsen jeweils in einem Punkt schneiden.

Die Drehlagerung der Förderrollen 20 wird dadurch bewerkstelligt, dass an beiden Endbereichen der Förderrolle 20 auf der Rollenachse 20c jeweils ein Drehlager 20a in Form eines Radialrillenkugellagers vorgesehen ist, das mit einer Lebensdauerschmierung versehen ist. Die Drehlager 20a sind jeweils in einem gesonderten Aufnahmeteil 37 aufgenommen, das an einer hinterschnittenen Nut 11d des Längsträgers 11a in jeder beliebigen Stellung bezüglich der Förderrichtung 10a befestigt werden kann. Die beiden Aufnahmeteile 37, die einer Förderrolle 20 zugeordnet sind, sind jeweils identisch ausgeführt und um 180° gedreht zueinander angeordnet. Zwischen zwei benachbarten Aufnahmeteilen 37 ist jeweils ein plattenartiges Verschlussteil 12d vorgesehen, so dass die Aufnahmeteile 37 mit den zugeordneten Verschlussteilen 12d eine geschlossene Wand bilden, die jeweils gemeinsam mit den Abdeckungen 12a oder 12b einen im Wesentlichen vollständig abgeschlossenen Raum umschließen, in dem die zugeordneten Lagerungs- und Antriebskomponenten geschützt vor Umgebungseinflüssen aufgenommen sind.

Hinzuweisen ist noch darauf, dass die zweite Lagerbaugruppe 31 von dem Aufnahmeteil 37 auf der Seite der Antriebswelle 51, dem zugeordneten Drehlager 20a und dem entsprechenden Halteteil 39 gebildet wird. Die erste Lagerbaugruppe 30 wird von den entsprechenden Teilen auf der gegenüber liegenden Seite der Förderrolle 20 gebildet.

Fig. 3 zeigt einen vergrößerten Ausschnitt von Fig. 2 mit der zweiten Lagerbaugruppe 31, der dritten Lagerbaugruppe 36 und der Antriebsbaugruppe 40. Fig. 3a zeigt die gleiche Anordnung aus einer anderen Blickrichtung.

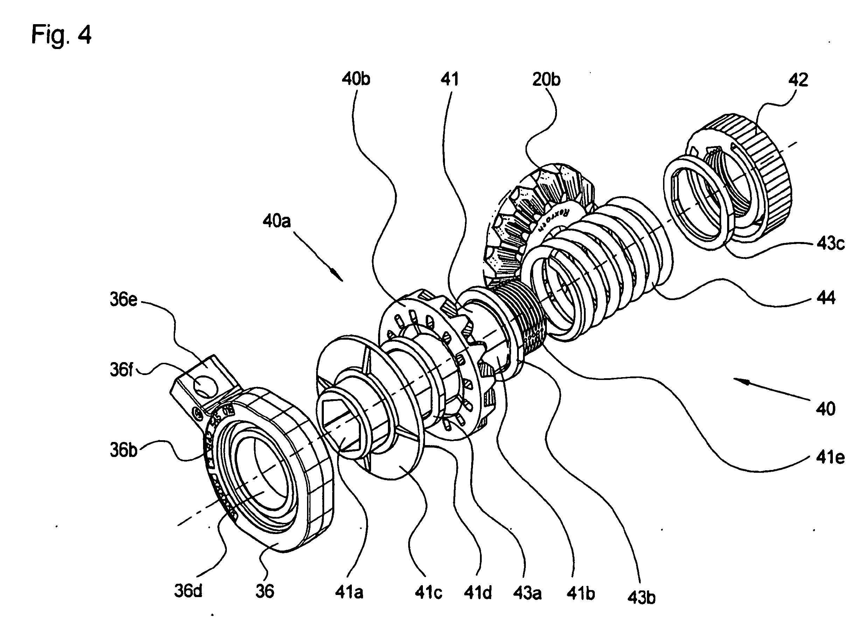

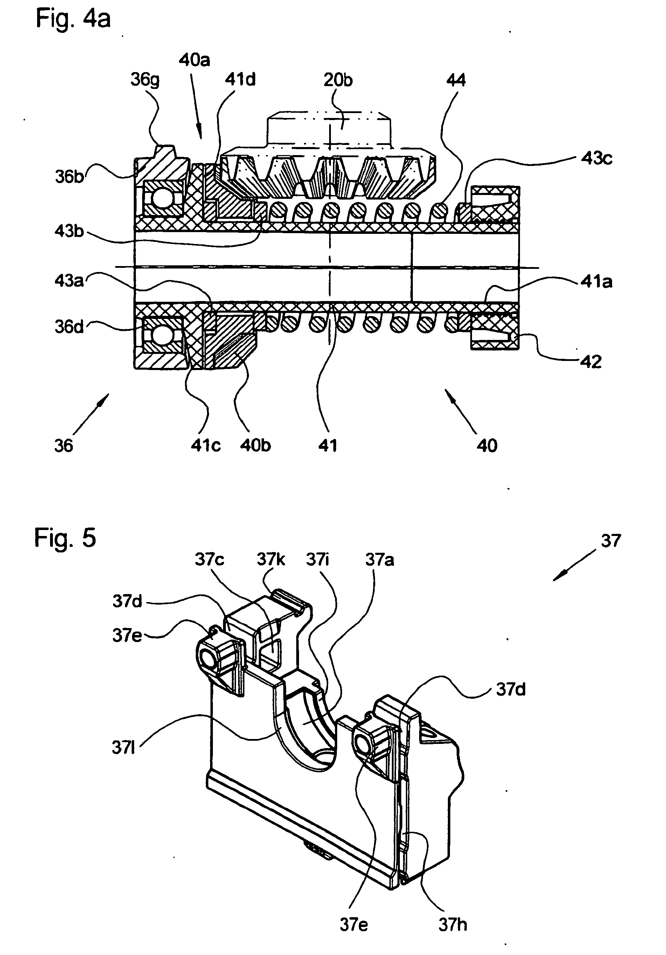

Die Antriebsbaugruppe 40 mit dem zweiten Antriebsrad 40b ist über die dritte Lagerbaugruppe 36 lösbar mit dem Aufnahmeteil 37 der zweiten Lagerbaugruppe 31 verbunden, wobei die genannten Baugruppen über den Schraubbolzen 36c aneinander befestigt sind. An dem Aufnahmeteil 37 ist eine Nut 37f vorgesehen, in die ein angepasster Ausrichtfortsatz (Nr. 36g in Fig. 4a) an der dritten Lagerbaugruppe 36 zum Zwecke der gegenseitigen Ausrichtung eingreift. Die Nut 37f verläuft kreisförmig gebogen um die Drehachse der Antriebswelle 51 herum, damit die dritte Lagerbaugruppe 36 frei um die genannte Drehachse gedreht werden kann, auch wenn sich die Antriebswelle 51 bereits in ihrer Einbauposition befindet. An der dritten Lagerbaugruppe 36 ist ein Haken 36a vorgesehen, der in eine angepasste Ausnehmung 37g an dem Aufnahmeteil 37 eingehakt werden kann. Bei der Montage des Rollenförderers werden dementsprechend zuerst die dritten Lagerbaugruppen 36 mit den zugeordneten Antriebsbaugruppen 40 auf die Antriebswelle 51 aufgeschoben, so dass sich eine Antriebswellenbaugruppe ergibt. Die Antriebsbaugruppe ist hierfür mit einem sechseckigen Durchbruch 41 a versehen, der so an die sechseckige Querschnittsform der Antriebswelle 51 angepasst ist, dass einerseits eine formschlüssige Drehantriebsverbindung und gleichzeitig die gewünschte Längsverschiebbarkeit zwischen der Antriebsbaugruppe 40 und der Antriebswelle 51 gegeben ist. Die genannte Antriebswellenbaugruppe wird nun mit Hilfe der Haken 36a in die entsprechenden Aufnahmeteile 37 eingehakt, so dass sie in der gewünschten Endbauposition gehalten ist. Normalerweise ist es ausreichend, nur zwei bezüglich der Antriebswelle 51 endseitige Haken 36a einzuhaken, damit ein ausreichender Halt vorhanden ist. Die dritten Lagerbaugruppen 36 können nun um die Drehachse der Antriebswelle 51 herum in ihre Einbaulage gedreht und mit den zugeordneten Aufnahmeteilen 37 verschraubt werden. Nach dem Abschluss dieser Arbeit wird die Lage der Antriebswelle, die bezüglich der Antriebsbaugruppe 40 längsverschiebbar ist, mit Positioniermitteln in Form von zwei Sicherungsscheiben 52 gesichert. Die Sicherungsscheiben 52 werden hierfür in entsprechende Nuten 51b eingeschnappt, die an der Antriebswelle 51 vorgesehen sind, wobei die Antriebswelle 51 mit einer Vielzahl derartiger Nuten, deren Lage an die vorgegebenen Abstandsmaße der Förderrollen 20 angepasst sind, ausgestattet ist.

In Fig. 3 und 3a sind weiter die Nuten 37h zur Aufnahme der plattenartigen Verschlussteile 12d zu erkennen. Weiter sind die Aufnahmenuten 37d zur Aufnahme des Befestigungssteges 13b der Seitenführung 13 zu erkennen, die an den Stirnseiten der U-Schenkel des insgesamt U-förmigen Aufnahmeteils 37 vorgesehen sind. Die Seitenführung 13 wird in diesen Aufnahmenuten 37d mit Hilfe der Gewindestifte 13c gesichert. Der zugeordnete Innengewindeabschnitt am Aufnahmeteil 37 dient gleichzeitig als Gegenrastmittel 37e für entsprechende Rastmittel an (nicht dargestellten) Abdeckungen zwischen den Förderrollen 20. Hinzuweisen ist noch auf die Rastnasen 37k für die seitlichen Abdeckungen (Nr. 12a und 12b in Fig. 2). Das Aufnahmeteil 37 ist aus Aluminium im Druckgussverfahren hergestellt, um die vielen Befestigungskonturen kostengünstig bereitstellen zu können.

In Fig. 3 und Fig. 3a ist weiter die Aufnahmeausnehmung 37a des Aufnahmeteils 37 zur Aufnahme der Drehlager 20a an der Förderrolle 20 zu erkennen. Die Aufnahmausnehmung 37a ist beidseitig mit Borden 37i versehen, die eine Verschiebung des Drehlagers in Richtung der Drehachse der zugeordneten Förderrolle 20 verhindern. Die Öffnung der Aufnahmeausnehmung 37a wird von einem Halteteil 39 aus Kunststoff verschlossen, das die angesprochenen Aufnahmekonturen für das Drehlager 20a an dem Aufnahmeteil 37 zur vollen Kreisform fortsetzt. Das Halteteil ist mit einem elastischen Schnapphaken 39a versehen, der in einen angepassten Durchbruch 37c eingeschnappt wird. An der gegenüberliegenden Seite ist das Halteteil 39 mit einem im Wesentlichen starren Haltefortsatz 39b versehen, der in eine angepasste Ausnehmung 37j so eingreift, dass das Halteteil 39 bezüglich des Aufnahmeteils 37 um wenigstens 30° verkippt werden kann, wodurch eine einfache Montage des Halteteils 39 ermöglicht wird. Das erste Antriebsrad 20b ist an der Rollenachse 20c mit einer Befestigungsschraube 20e befestigt, wobei an der Stirnseite der Rollenachse 20c zwei (nicht sichtbare) Schlüsselflächen vorgesehen sind, die einen formschlüssigen Eingriff zwischen dem ersten Antriebsrad 20b und der zugeordneten Rollenachse 20c herstellen

Fig. 4 zeigt eine Explosionsansicht der Antriebsbaugruppe 40 mit der zugeordneten dritten Lagerbaugruppe 36. Fig. 4a zeigt die genannten Baugruppen im Querschnitt.

Die dritte Lagerbaugruppe 36 umfasst ein Basisbauteil 36b aus Aluminium-Druckguss, in das ein Lebensdauer geschmiertes Radialrillenkugellager 36d als Drehlager für die Antriebsbaugruppe 40 eingebaut ist. An dem Basisbauteil 36b ist ein Befestigungsfortsatz 36e mit einer Befestigungsbohrung 36f für den oben genannten Schraubbolzen (Nr. 36c in Fig. 3). Hinzuweisen ist noch auf den in Fig. 4a sichtbaren Ausrichtfortsatz 36g, der in die Nut (Nr. 37f in Fig. 3) des Aufnahmeteils eingreift.

Die Antriebsbaugruppe 40 umfasst eine im Wesentlichen kreiszylindrische Hülse 41, die aus faserverstärktem Polyamid spritzgegossen ist. An der Innenseite der Hülse ist ein Durchbruch 41 a mit einem sechseckigen Querschnitt vorgesehen, der so an die Antriebswelle angepasst ist, dass die Hülse 41 in Längsrichtung auf dieser verschiebbar ist, wobei gleichzeitig eine formschlüssige Drehantriebsverbindung gegeben ist. An der Außenumfangsfläche der Hülse 41 ist ein Flansch 41 c einstückig vorgesehen, zu dessen in Fig. 4 linken Seite das Drehlager 36d auf der Hülse 41 so montiert ist, dass die Antriebsbaugruppe 40 als Ganzes in die dritte Lagerbaugruppe 36 eingebaut werden kann. Die in Fig. 4 rechte Seitenfläche des Flansches dient als Reibfläche 41d für das zweite Antriebsrad 40b, das gleitend an dieser anliegt, wobei es von der Schraubenfeder 44 gegen diese vorgespannt wird, so dass eine Rutschkupplung 40a gebildet wird. An der Außenumfangsfläche der Hülse 41 sind insgesamt drei identische Gleitringe 43a; 43b und 43c aus Polyoxymethylen (POM) oder Sintermetall vorgesehen, die über zwei gegenüberliegende Schlüsselflächen 41b drehfest und längsverschiebbar an der Hülse 41 gehalten sind. Der erste Gleitring 43a dient primär als Radiallager für das gegenüber der Hülse 41 drehbewegliche zweite Antriebsrad 40b. Mit dem zweiten Gleitring 43b soll verhindert werden, dass die Feder 44 von dem drehenden zweiten Antriebsrad 40b mitgenommen wird, so dass sie gegenüber der Hülse 41 immer still steht. Mit dem dritten Gleitring 43c wird verhindert, dass eine Drehbewegung des Anschlages 42 auf die Feder 44 übertragen wird. Der Anschlag 42 steht in Schraubeingriff mit einem Außengewinde 41e an der Hülse 41, so dass er durch Verdrehen in Längsrichtung gegenüber der Hülse 41 verlagert werden kann, wodurch die Feder 44 gegen das zweite Antriebsrad 40b vorgespannt wird. Das Außengewinde 41 e ist ein Feingewinde, so dass es selbsthemmend ist, damit sich der Anschlag 42 nicht von selbst löst.

Fig. 5 zeigt eine perspektivische Ansicht des Aufnahmeteils 37 aus der gegenüber Fig.3 und 3a entgegen gesetzten Richtung. Hinzuweisen ist an dieser Stelle nur auf die U-förmige Ausnehmung 371, die an die Achse der Förderrolle mit einem geringen Abstand angepasst ist, so dass das dahinter angeordnete Drehlager gut vor Umgebungseinflüssen geschützt ist. Im Übrigen wird auf die Ausführung zu Fig. 3 und 3a verwiesen, um Wiederholungen zu vermeiden.

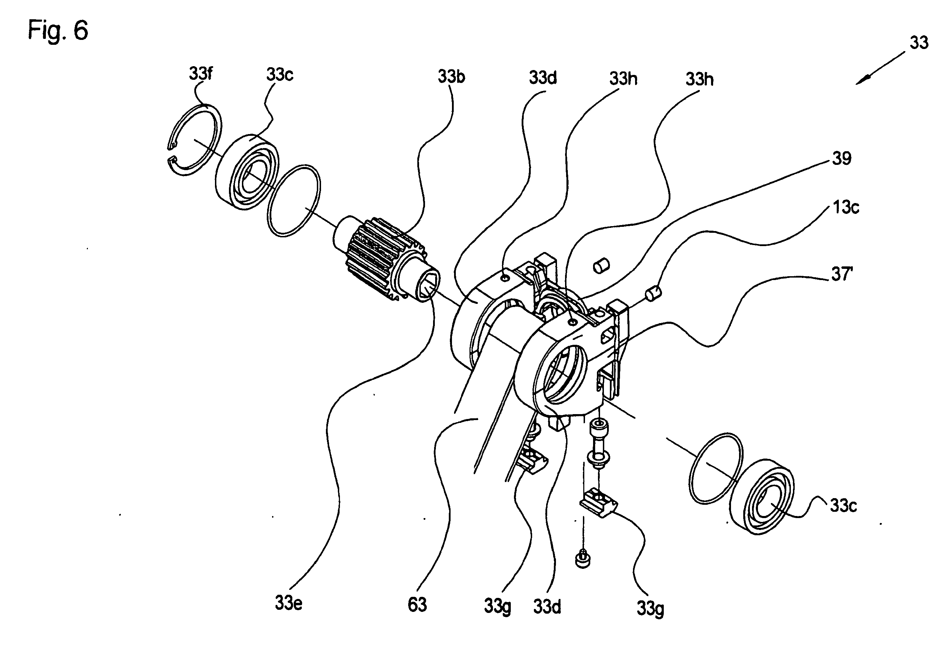

Fig. 6 zeigt eine zweite Lagerbaugruppe 33, die mit einem dritten Antriebsrad 33b ausgestattet ist. Hinsichtlich der Lagerung der (nicht dargestellten) Förderrolle und der Befestigung der angrenzenden Bauteile ist diese Lagerbaugruppe 33 genauso ausgeführt wie die zweite Lagerbaugruppe (Nr. 31 in Fig. 3 und Fig. 3a), die nicht mit einem dritten Antriebsrad versehen ist, so dass in dieser Hinsicht auf die vorstehenden Ausführungen verwiesen wird.

Das dritte Antriebsrad 33b dient zum Antrieb der Antriebswelle (Nr. 51 in Fig. 2). Es ist hierfür über ein Zugmittel 63 in Form eines Zahnriemens mit einem (nicht dargestellten) Elektromotor verbunden. Die Drehantriebsverbindung zur Antriebswelle wird wie bei der Antriebsbaugruppe (Nr. 40 in Fig. 4) über einen sechseckigen Durchbruch 33e im dritten Antriebsrad 33b hergestellt, so dass das dritte Antriebsrad 33b per Formschluss drehfest mit der Antriebswelle verbunden ist, wobei die Antriebswelle gleichzeitig zwecks deren einfacher Montage längsverschiebbar bezüglich dem dritten Antriebsrad 33b ist.

Das dritte Antriebsrad 33b ist in gerader Verlängerung der Förderrolle in dem Bereich angeordnet, an dem sich normalerweise das zweite Antriebsrad befindet. An dem Aufnahmeteil 37 sind hierfür zwei Lagerflansche 33d einstückig vorgesehen. In beiden Lagerflanschen 33d ist je ein Drehlager 33c in Form eines Lebensdauer geschmierten Radialrillenkugellagers aufgenommen, in dem das dritte Antriebsrad 33b und mithin die Antriebswelle drehbar gelagert sind. Die beidseitige Lagerung des dritten Antriebsrades 33b ist notwendig, damit die Drehlagerung den Zugkräften aufgrund der Spannung des Zahnriemens 63 über einen genügend langen Zeitraum stand hält. Die Baugruppe, bestehend aus dem dritten Antriebsrad 33b und den beiden zugeordneten Drehlagern 33c wird mit dem Sicherungsring 33f in der zweiten Lagerbaugruppe 33 gehalten. Mit den beiden Nutensteinen 33g wird die zweite Lagerbaugruppe 33 an den hinterschnittenen Nuten des zugeordneten Längsträgers befestigt. Die beiden Befestigungsgewinde 33h dienen zur Befestigung der Riemenabdeckung (Nr. 65 in Fig. 1).

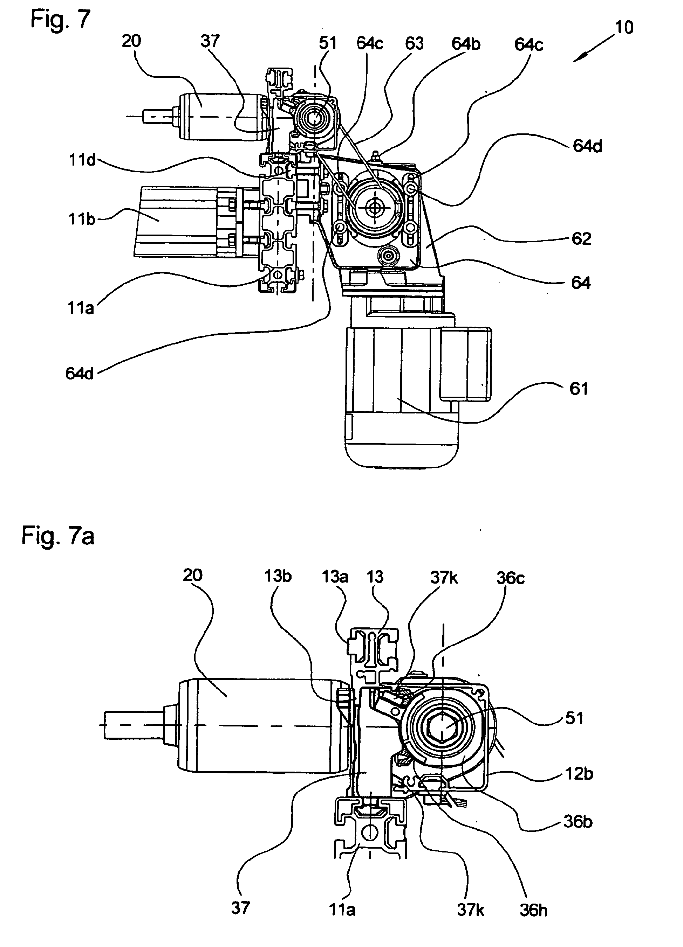

Fig. 7 zeigt eine Vorderansicht des Antriebsmoduls gemäß Fig. 1, wobei die Riemenabdeckung (Nr. 65 in Fig. 1) entfernt wurde. Zu erkennen ist der Motorflansch 64, mit dem der Elektromotor 61 einschließlich des Getriebes 62 an den hinterschnittenen Nuten 11 d des Längsträgers 11 a befestigt sind. Zur Festlegung der Lage des Motorflansches 64 am Längsträger 11 a wird dieser solange in Förderrichtung verschoben, bis er am Aufnahmeteil 37 der zugeordneten zweiten Lagerbaugruppe anstößt. Die genannten Bauteile und der Motor 61 sind so aufeinander abgestimmt, dass der Zahnriemen 63 in dieser Stellung exakt senkrecht zur Drehachse der Antriebswelle 51 ausgerichtet ist. Der Motorflansch 64 ist mit zwei Langlöchern 64c ausgestattet, so dass der Motor 61 in unterschiedlichen Positionen am Motorflansch 64 befestigt werden kann. Mit Hilfe der Einstellschraube 64b wird der Motor 61 in die Position verschoben, in der der Zahnriemen 63 die geeignete Spannung aufweist. Sodann wird der Motor 61 mit den Befestigungsschrauben 64d an dem Motorflansch 64 fest geschraubt.

Fig. 7a zeigt einen vergrößerten Ausschnitt von Fig. 7 im Bereich der sechseckigen Antriebswelle 51. Dieser Ansicht ist insbesondere zu entnehmen, wie die U-förmige Abdeckung 12b in die zugeordneten Rastnasen 37k am Aufnahmeteil 37 eingeschnappt ist. Weiter ist die Seitenfiihrungsleiste 13 mit dem darin aufgenommenen Reibbelag 13a zu erkennen, der etwas über die Seitenführungsleiste 13 über steht, so dass der zugeordnete (nicht dargestellte) Werkstückträger nur mit dem Reibbelag 13a in Gleitkontakt steht. Darüber hinaus ist dargestellt, wie die Seitenführungsleiste 13 mit ihrem Befestigungssteg 13b in das Aufnahmeteil 37 eingesetzt ist. Hinzuweisen ist außerdem auf das Basisbauteil 36b mit seiner zur Antriebswelle 51 konzentrischen Außenumfangsfläche 36h, die es ermöglicht, die dritte Lagerbaugruppe bei entferntem Schraubbolzen 36c gegenüber der Antriebswelle 51 zu verdrehen, wobei die Außenumfangsfläche 36h gleichzeitig als Anlagefläche zum Aufnahmeteil 37 dient.

### Bezugszeichenliste

- 10: Rollenförderer
- 10a: Förderrichtung

- 11: Gestell
- 11a: Längsträger
- 11b: Querträger
- 11c: Verbindungsleiste
- 11d: hinterschnittene Nut

- 12a: U-förmige Abdeckung (passive Seite)
- 12b: U-förmige Abdeckung (Antriebsseite)
- 12d: plattenartiges Verschlussteil

- 13: Seitenführungsleiste
- 13a: Reibbelag
- 13b: Befestigungssteg
- 13c: Gewindestift

- 20: Förderrolle
- 20a: Drehlager
- 20b: erstes Antriebsrad
- 20c: Rollenachse
- 20d: Auflageabschnitte
- 20e: Befestigungsschraube

- 30: erste Lagerbaugruppe
- 31: zweite Lagerbaugruppe
- 33: zweite Lagerbaugruppe mit drittem Antriebsrad
- 33b: drittes Antriebsrad
- 33c: Drehlager für drittes Antriebsrad
- 33d: Lagerflansch
- 33e: Durchbruch
- 33f: Sicherungsring
- 33g: Nutensteine
- 33h: Befestigungsgewinde für Riemenabdeckung

- 36: dritte Lagerbaugruppe
- 36a: Haken
- 36b: Basisbauteil
- 36c: Schraubbolzen
- 36d: Drehlager
- 36e: Befestigungsfortsatz
- 36f: Befestigungsbohrung
- 36g: Ausrichtfortsatz
- 36h: Außenumfangsfläche

- 37: Aufnahmeteil
- 37a: Aufnahmausnehmung
- 37c: Durchbruch für Schnapphaken
- 37d: Aufnahmenut für die Seitenführungsleiste
- 37e: Halte-/Rastmittel für eine Abdeckung zwischen den Rollen
- 37f: Ausrichtnut für dritte Lagerbaugruppe
- 37g: Ausnehmung für Haken
- 37h: Aufnahmenut für plattenartiges Verschlussteil
- 37i: Bord für Drehlager
- 37j: Aufnahmeausnehmung für Haltefortsatz am Halteteil
- 37k: Rastnase für die seitlichen Abdeckungen
- 37l: Ausnehmung für Rollenachse

- 39: Halteteil
- 39a: Schnapphaken
- 39b: Haltefortsatz

- 40: Antriebsbaugruppe
- 40a: Rutschkupplung
- 40b: zweites Antriebsrad
- 41: Hülse
- 41a: Durchbruch
- 41b: Schlüsselfläche
- 41c: Flansch
- 41d: Reibfläche
- 41e: Außengewinde
- 42: Anschlag
- 43a: erster Gleitring
- 43b: zweiter Gleitring
- 43c: dritter Gleitring
- 44: Feder

- 51: Antriebswelle
- 51b: Nut für Sicherungsscheibe
- 52: Sicherungsscheibe
- 53: Klauenkupplung

- 61: Motor
- 62: Getriebe
- 63: Zugmittel
- 64: Motorflansch
- 64b: Einstellschraube
- 64c: Langlöcher
- 64d: Befestigungsschraube
- 65: Riemenabdeckung

## Patentansprüche

1. Rollenförderer (10) mit mehreren Förderrollen (20), die eine Förderfläche und eine Förderrichtung (10a) definieren, wobei die Förderrollen (20) an ihren Endbereichen drehbar mit einer ersten und einer zweite Lagerbaugruppe (30; 31; 33) verbunden sind, wobei die erste und die zweite Lagerbaugruppe (30; 31; 33) bezüglich der Förderrichtung (10a) in unterschiedlichen, vorzugsweise kontinuierlich veränderlichen, Stellungen an einem Gestell (11) befestigbar ist, wobei wenigstens ein Teil der Förderrollen (20) an der zweiten Lagerbaugruppe (31) je ein erstes Antriebsrad (20b) aufweist, das mit je einem zweiten Antriebsrad (40b) in Drehantriebsverbindung steht, wobei die zweiten Antriebsräder (40b) auf einer drehbaren Antriebswelle (51) angeordnet sind und mit dieser in Drehantriebsverbindung stehen,
wobei ein drittes Antriebsrad (33b) vorgesehen ist, dass drehfest auf der Antriebswelle (51) angeordnet ist, wobei das dritte Antriebsrad (33b) mit einem Antrieb (61) in Drehantriebsverbindung steht,
**dadurch gekennzeichnet, dass** das dritte Antriebsrad (33b) an der zweiten Lagerbaugruppe (33) wenigstens einer Förderrolle (20) drehbar gelagert ist,
wobei das dritte Antriebsrad (33b) in der geradlinigen Verlängerung der Drehachse der zugeordneten Förderrolle (20) angeordnet ist, wobei die genannte Förderrolle (20) kein erstes Antriebsrad aufweist.

2. Rollenförderer nach Anspruch 1
**dadurch gekennzeichnet, dass** die Antriebswelle (51) längsverschiebbar in dem dritten Antriebsrad (33b) aufgenommen ist.

3. Rollenförderer nach Anspruch 2,
**dadurch gekennzeichnet, dass** die Antriebswelle (51) über ihre gesamte Länge eine im Wesentlichen konstante Querschnittsform aufweist, die von der Kreisform abweicht, wobei die Querschnittsform vorzugsweise als Sechseck ausgeführt ist, wobei das dritte Antriebsrad (33b) einen Durchbruch (33e) aufweist, der von der Antriebswelle (51) durchsetzt wird, wobei der Durchbruch (33e) so an die Antriebswelle angepasst ist, dass das dritte Antriebsrad (33b) in Drehrichtung formschlüssig mit der Antriebswelle (51) verbunden ist.

4. Rollenförderer nach einem der vorstehenden Ansprüche,
**dadurch gekennzeichnet, dass** das dritte Antriebsrad (33b) über ein Zugmittel (63) in Drehantriebsverbindung mit einem Motor (61) steht.

5. Rollenförderer nach Anspruch 4,
**dadurch gekennzeichnet, dass** an dem Gestell (11) ein gesonderter Motorflansch (64) vorgesehen ist, an dem der Motor (61) lageverstellbar befestigt ist.

6. Rollenförderer nach Anspruch 5,
**dadurch gekennzeichnet, dass** an dem Motorflansch (64) ein Einstellmittel, vorzugsweise eine Einstellschraube (64b), vorgesehen ist, mit der der Motor (61) verschoben werden kann, so dass das Zugmittel (63) gespannt wird.

7. Rollenförderer nach einem der Ansprüche 5 oder 6,
**dadurch gekennzeichnet, dass** an der zweiten Lagerbaugruppe (33) ein Ausrichtmittel vorgesehen ist, das in Ausrichteingriff mit einem Gegenausrichtmittel an dem Motorflansch (64) steht.

8. Rollenförderer nach einem der Ansprüche 4 bis 7,
**dadurch gekennzeichnet, dass** das Zugmittel (63) von einer Abdeckung (65) umschlossen ist, die an der zugeordneten zweiten Lagerbaugruppe (33) befestigt ist.

9. Rollenförderer nach einem der vorstehenden Ansprüche,
**dadurch gekennzeichnet, dass** zu beiden Seiten des dritten Antriebsrades (33b) ein Drehlager (20a) vorgesehen ist, das in der zugeordneten zweiten Lagerbaugruppe (33) aufgenommen ist.

## Claims

1. Roller conveyor (10) having a plurality of conveying rollers (20) which define a conveying surface and a conveying direction (10a), wherein the end regions of the conveying rollers (20) are connected in a rotatable manner to a first and a second bearing subassembly (30; 31; 33), wherein the first and the second bearing subassembly (30; 31; 33) can be fastened, with regard to the conveying direction (10a), in different, preferably continuously variable, positions on a frame (11), wherein at least a part of the conveying rollers (20) has at the second bearing subassembly (31) a respective first drive wheel (20b) which is in rotary driving connection with a respective second drive wheel (40b), wherein the second drive wheels (40b) are arranged on a rotatable drive shaft (51) and are in rotary driving connection therewith,
wherein there is provided a third drive wheel (33b) which is arranged in a rotationally fixed manner on the drive shaft (51), wherein the third drive wheel (33b) is in rotary driving connection with a drive (61),
**characterized in that** the third drive wheel (33b) is mounted in a rotatable manner on the second bearing subassembly (33) of at least one conveying roller (20),
wherein the third drive wheel (33b) is arranged in the rectilinear extension of the rotation axis of the associated conveying roller (20), wherein said conveying roller (20) has no first drive wheel.

2. Roller conveyor according to Claim 1,
**characterized in that** the drive shaft (51) is accommodated in a longitudinally displaceable manner in the third drive wheel (33b).

3. Roller conveyor according to Claim 2,
**characterized in that** the drive shaft (51) has along its entire length a substantially constant cross-sectional shape which deviates from a circular shape, wherein the cross-sectional shape is preferably configured as a hexagon, wherein the third drive wheel (33b) has a through-passage (33e) through which the drive shaft (51) passes, wherein the through-passage (33e) is matched to the drive shaft such that the third drive wheel (33b) is connected in a form-fitting manner to the drive shaft (51) in the direction of rotation.

4. Roller conveyor according to one of the preceding claims,
**characterized in that** the third drive wheel (33b) is in rotary driving connection with a motor (61) via a traction means (63).

5. Roller conveyor according to Claim 4,
**characterized in that** on the frame (11) there is provided a separate motor flange (64) to which the motor (61) is fastened in a positionally adjustable manner.

6. Roller conveyor according to Claim 5,
**characterized in that** on the motor flange (64) there is provided an adjusting means, preferably an adjusting screw (64b), by way of which the motor (61) can be moved such that the traction means (63) is tensioned.

7. Roller conveyor according to either of Claims 5 and 6,
**characterized in that** on the second bearing subassembly (33) there is provided an aligning means which is in aligning engagement with a counterpart aligning means on the motor flange (64).

8. Roller conveyor according to one of Claims 4 to 7,
**characterized in that** the traction means (63) is enclosed by a cover (65) which is fastened to the associated second bearing subassembly (33).

9. Roller conveyor according to one of the preceding claims,
**characterized in that** on both sides of the third drive wheel (33b) there is provided a rotary bearing (20a) which is accommodated in the associated second bearing subassembly (33).

## Revendications

1. Transporteur à rouleaux (10) comprenant plusieurs rouleaux de transport (20) qui définissent une surface de transport et une direction de transport (10a), les rouleaux de transport (20) étant connectés de manière rotative au niveau de leurs régions d'extrémité à un premier et à un deuxième module de palier (30 ; 31 ; 33), le premier et le deuxième module de palier (30 ; 31 ; 33) pouvant être fixés, par rapport à la direction de transport (10a), dans différentes positions de préférence variables en continu sur un bâti (11), au moins une partie des rouleaux de transport (20) sur le deuxième module de palier (31) présentant à chaque fois une première roue d'entraînement (20b) qui est en liaison d'entraînement en rotation avec une deuxième roue d'entraînement respective (40b), les deuxièmes roues d'entraînement (40b) étant disposées sur un arbre d'entraînement rotatif (51) et étant en liaison d'entraînement en rotation avec celui-ci,
une troisième roue d'entraînement (33b) étant prévue, laquelle est disposée de manière solidaire en rotation sur l'arbre d'entraînement (51), la troisième roue d'entraînement (33b) étant en liaison d'entraînement en rotation avec un entraînement (61),
**caractérisé en ce que** la troisième roue d'entraînement (33b) est montée de manière rotative sur le deuxième module de palier (33) d'au moins un rouleau de transport (20),
la troisième roue d'entraînement (33b) étant disposée dans le prolongement rectiligne de l'axe de rotation du rouleau de transport associé (20), ledit rouleau de transport (20) ne présentant pas de première roue d'entraînement.

2. Transporteur à rouleaux selon la revendication 1, **caractérisé en ce que** l'arbre d'entraînement (51) est reçu de manière déplaçable longitudinalement dans la troisième roue d'entraînement (33b).

3. Transporteur à rouleaux selon la revendication 2, **caractérisé en ce que** l'arbre d'entraînement (51) présente sur toute sa longueur une forme essentiellement constante en section transversale, qui s'écarte de la forme circulaire, la forme en section transversale étant réalisée de préférence sous forme d'hexagone, la troisième roue d'entraînement (33b) présentant un orifice (33e) à travers lequel passe l'arbre d'entraînement (51), l'orifice (33e) étant adapté à l'arbre d'entraînement de telle sorte que la troisième roue d'entraînement (33b) soit connectée dans la direction de rotation par engagement par correspondance géométrique avec l'arbre d'entraînement (51).

4. Transporteur à rouleaux selon l'une quelconque des revendications précédentes,
**caractérisé en ce que** la troisième roue d'entraînement (33b) est en liaison d'entraînement en rotation avec un moteur (61) par le biais d'un moyen de traction (63).

5. Transporteur à rouleaux selon la revendication 4,
**caractérisé en ce qu'**une bride de moteur (64) séparée est prévue sur le bâti (11), le moteur (61) étant fixé de manière déplaçable sur ladite bride.

6. Transporteur à rouleaux selon la revendication 5,
**caractérisé en ce qu'**un moyen d'ajustement, de préférence une vis d'ajustement (64b), est prévu sur la bride de moteur (64), avec lequel le moteur (61) peut être déplacé, de manière à tendre le moyen de traction (63).

7. Transporteur à rouleaux selon l'une quelconque des revendications 5 ou 6,
**caractérisé en ce qu'**un moyen d'orientation est prévu sur le deuxième module de palier (33), lequel est en prise d'orientation avec un moyen d'orientation conjugué sur la bride de moteur (64).

8. Transporteur à rouleaux selon l'une quelconque des revendications 4 à 7,
**caractérisé en ce que** le moyen de traction (63) est entouré par un recouvrement (65) qui est fixé sur le deuxième module de palier associé (33).

9. Transporteur à rouleaux selon l'une quelconque des revendications précédentes,
**caractérisé en ce que** des deux côtés de la troisième roue d'entraînement (33b) est prévu un palier pivotant (20a) qui est reçu dans le deuxième module de palier associé (33).
